# DEMANDE DE BREVET EUROPEEN

(11) **EP 2 067 593 A1**
(43) Date de publication de la demande: **10.06.2009**
(21) Numéro de dépôt: 08170683.0
(22) Date de dépôt: 04.12.2008
(51) Int. Cl.: B29C 31/04, B29C 45/23, B29C 45/54

(54) **Equipement de réalisation de pièces à partir de matière plastique**

(30) Priorité: 06.12.2007 FR 0708513
(71) Demandeur: Adapt Plastics, 69740 Genas (FR)
(72) Inventeur: Therville, Maurice, 69007 Lyon (FR)
(74) Mandataire: Verriest, Philippe

(57) **Abrégé**

L'invention concerne un équipement de réalisation de pièces plastiques comportant une machine (1) comprenant une chambre de plastification (2) équipée d'une vis de plastification (3) et d'une ouverture (4) d'amenée de la matière plastique en liaison avec un pot intermédiaire (5), destiné à être chargé avec de la matière plastique, un piston (6) déplaçable entre une position de chargement du pot intermédiaire (5) et une position de déchargement de celui-ci, **caractérisé en ce qu**'il comprend un ensemble de têtes de délivrance de matière plastique comprenant au moins deux éléments parmi une tête de soufflage (7), une tête d'injection (8) et une tête d'extrusion (9).

## Description

L'invention concerne un équipement de réalisation de pièces plastiques.

Un équipement classique est décrit dans le document FR 2 826 905.

Ce type d'équipement comporte une machine comprenant une chambre de plastification équipée d'une vis de plastification et d'une ouverture d'amenée de la matière plastique en liaison avec un pot intermédiaire, destiné à être chargé avec de la matière plastique, un piston déplaçable entre une position de chargement du pot intermédiaire et une position de déchargement de celui-ci.

De manière générale, chaque équipement est dédié à un procédé particulier de réalisation de pièces plastiques.

C'est ainsi que, comme représenté dans le document FR 2 826 905, la machine est équipée d'une tête d'injection montée sur la machine, l'injection étant contrôlée par une tige de commande spécifique, formant obturateur pour la tête d'injection.

Ce type d'équipement ne peut servir à réaliser que des pièces plastiques par injection.

L'invention vise à remédier à cet inconvénient en proposant un équipement pouvant s'adapter de manière simple et rapide à plusieurs procédés de fabrication de pièces plastiques.

A cet effet, l'invention concerne un équipement du type précité, caractérisé en ce qu'il comprend un ensemble de têtes de délivrance de matière plastique comprenant au moins deux éléments parmi une tête de soufflage, une tête d'injection et une tête d'extrusion, chaque tête comprenant une partie fixe par rapport à la machine, la partie fixe comportant une chambre avec une ouverture d'amenée de la matière plastique, tournée vers le pot intermédiaire et une ouverture d'expulsion de la matière débouchant vers l'extérieur à l'opposé de l'ouverture d'amenée de la matière, la partie fixe comprenant des moyens de fixation destinés à coopérer avec des moyens de fixation complémentaires de la machine, et une partie mobile par rapport à la machine, la partie mobile comprenant une tige de commande destinée à être logée, au moins en partie, dans la machine.

De cette manière, la machine peut accueillir différents types de têtes, de manière à pouvoir réaliser des pièces par injection, par soufflage ou par extrusion.

Le changement d'une tête s'accompagne du changement de la tige de commande correspondante.

Selon une caractéristique de l'invention, la tige de commande traverse le pot intermédiaire et est commandée par son extrémité opposée à la tête de délivrance de matière plastique.

Préférentiellement, le piston présente une forme générale tubulaire et définit un logement central traversant dans lequel est inséré la tige de commande.

Selon une caractéristique de l'invention, l'équipement comporte des moyens de transport de pièces, déplaçables entre une position de moulage dans laquelle la pièce est disposée en regard de la tête de délivrance de matière plastique et une position de chargement et/ou de déchargement dans laquelle la pièce est éloignée de la tête de délivrance de matière plastique.

Cette caractéristique permet de pouvoir travailler en temps masqué, par exemple dans le cas de surmoulage de pièces.

C'est ainsi qu'il est possible d'effectuer le surmoulage d'une pièce tandis que l'on effectue simultanément le chargement de la pièce suivante ou le déchargement de la pièce précédente.

Avantageusement, l'équipement comporte une partie amovible de contrôle et/ou de commande de la machine, connectée à la machine par l'intermédiaire d'une interface.

De toute façon, l'invention sera bien comprise à l'aide de la description qui suit, en référence au dessin schématique annexé représentant, à titre d'exemple non limitatif, une forme d'exécution de cet équipement.
Figure 1 est une vue en coupe longitudinale de l'équipement selon l'invention, équipé d'une tête de soufflage ;
Figure 2 est une vue en coupe longitudinale du pot intermédiaire et de la chambre de plastification de la machine;
Figure 3 est une vue en coupe d'une tête d'injection équipée de la tige de commande correspondante ;
Figure 4 est une vue en coupe d'une tête d'extrusion équipée de la tige de commande correspondante;
Figure 5 est une vue en perspective, de dessus, des moyens de transport des pièces.

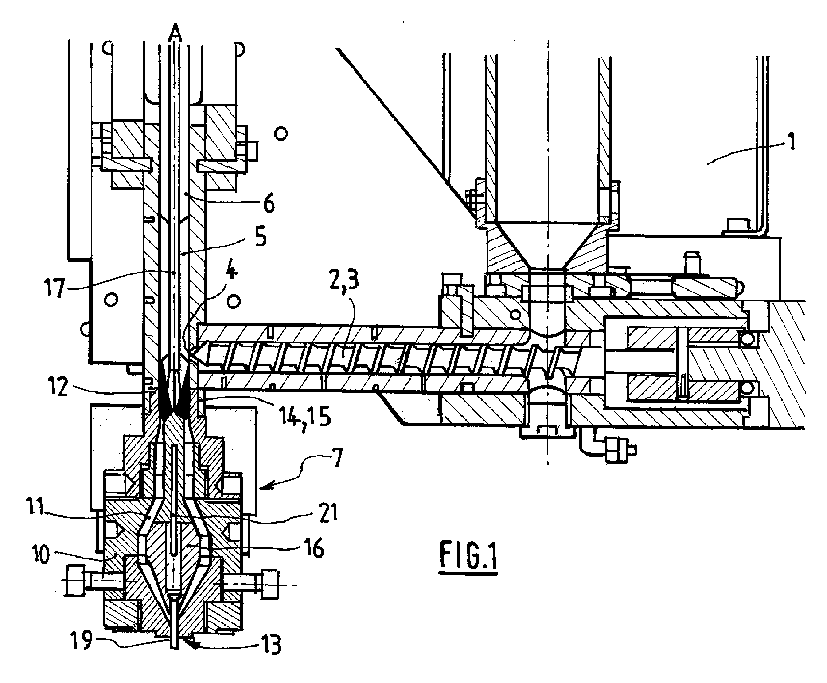

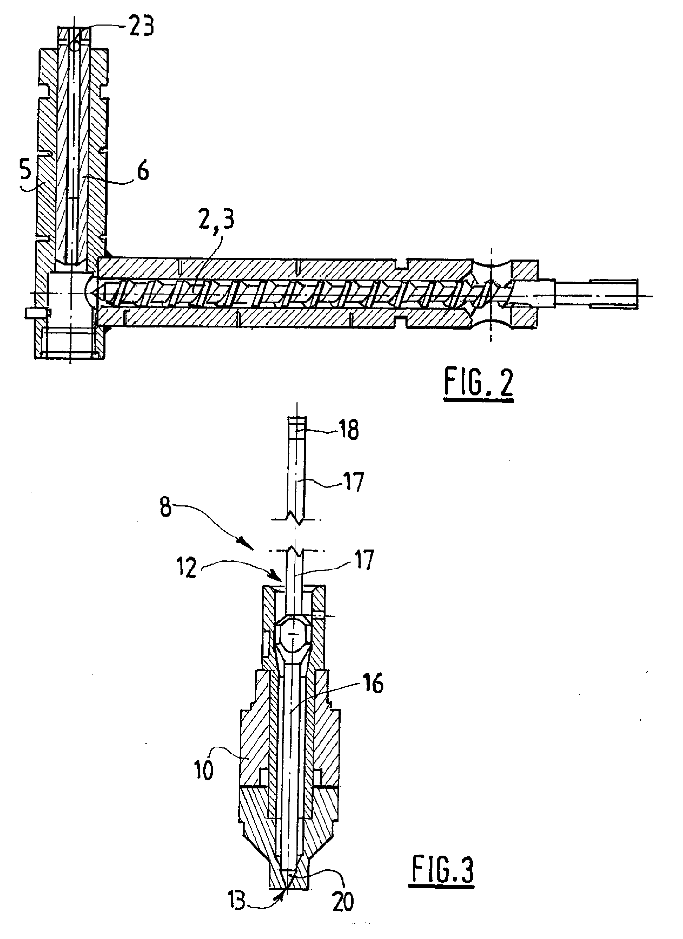

Les figures 1 et 2 représentent un équipement de réalisation de pièces plastiques comportant une machine 1 comprenant une chambre de plastification 2 équipée d'une vis de plastification 3 et d'une ouverture d'amenée de la matière plastique 4 en liaison avec un pot intermédiaire 5, destiné à être chargé avec de la matière plastique.

Le pot intermédiaire 5 se présente sous la forme d'une chambre cylindrique allongée, disposée perpendiculairement à la vis de plastification 3.

L'ouverture 4 de la chambre de plastification 2 est ménagée en partie basse du pot intermédiaire 5.

Comme cela est connu en soi, la chambre de plastification 2 et le pot intermédiaire 5 sont équipés de colliers chauffants permettant d'ajuster la température de la matière plastique qu'ils contiennent.

La machine comporte en outre un piston 6 déplaçable en translation suivant l'axe A du pot intermédiaire 5 par des moyens connus de l'homme du métier, entre une position de chargement du pot intermédiaire 5 et une position de déchargement de celui-ci.

L'équipement comprend de plus un ensemble de têtes de délivrance de matière plastique, à savoir une tête de soufflage 7, une tête d'injection 8 et une tête d'extrusion 9.

La figure 1 représente plus particulièrement une machine 1 équipée d'une tête de soufflage 7. Il est toutefois possible, comme cela est décrit ci-après, de changer rapidement et simplement la tête de soufflage par la tête d'injection 8 ou par la tête d'extrusion 9.

Comme représenté en figures 1, 3 et 4, chaque tête comprend une partie fixe 10 par rapport à la machine 1, la partie fixe 10 comportant une chambre 11 avec une ouverture 12 d'amenée de la matière plastique, tournée vers le pot intermédiaire 5 et une ouverture d'expulsion 13 de la matière débouchant vers l'extérieur à l'opposé de l'ouverture 12 d'amenée de la matière.

La partie fixe comprend un filetage 14 destiné à coopérer avec un taraudage complémentaire 15 de la machine 1.

Chaque tête 7, 8, 9 comporte en outre une partie mobile 16 par rapport à la machine, la partie mobile comprenant une tige de commande 17 destinée à être logée, au moins en partie, dans la machine 1.

Le piston 6 présente une forme générale tubulaire et définit un logement central traversant dans lequel est inséré la tige de commande 17 qui, traversant le pot intermédiaire 5, est commandée par son extrémité opposée à la tête de soufflage 7.

La course de la tige de commande 17 est comprise entre 4 et 10 mm, préférentiellement de l'ordre de 6 mm.

L'extrémité de la tige de commande 17 reliée à la machine 1 présente deux méplats 18 formant des moyens de fixation et de découplage rapides avec des moyens de fixation 23 complémentaires du piston 6 la machine 1.

Comme cela apparaît en figure 1, la partie mobile 16 de la tête de soufflage 7 comporte une extrémité 19 en forme de tige tronconique traversant l'ouverture d'expulsion 13 de la partie fixe 10, définissant ainsi un passage annulaire par lequel peut être expulsé la matière plastique.

La position de la tige d'extrémité 19, plus précisément la position de la tige de commande 17 à laquelle elle est reliée, permet de faire varier les dimensions de l'anneau et, par conséquent, le débit de matière plastique a expulser.

La tête de soufflage comprend un conduit de soufflage 21 ménagé dans la partie mobile de la tête, qui débouche au niveau de la tige d'extrémité 19 et qui permet de souffler de l'air ou un autre gaz à l'intérieur de l'anneau de matière formé.

La tête de soufflage 7 peut être remplacée par une tête d'injection 8 représentée en figure 3. Sur cette figure, les éléments de la tête d'injection 8 présentant une structure ou une fonction similaire à celle de la tête de soufflage 7 ont été désignés par les mêmes références.

La tête d'injection 8 présente une partie fixe 10 comprenant un filetage 14 similaire à celui de la tête de soufflage 7, de dimensions complémentaires à celles du taraudage 15 de la machine 1.

La tige de commande 17 correspondant à la tête d'injection 8 présente une première extrémité couplée à la machine par des moyens de fixation rapides 18 similaires à ceux décrit précédemment, en référence à la tige de commande équipant la tête de soufflage 7.

Cette tige de commande 17 comporte en outre une seconde extrémité conique 20 formant un obturateur de manière à empêcher ou à autoriser l'expulsion de la matière plastique au travers de l'ouverture d'expulsion correspondante.

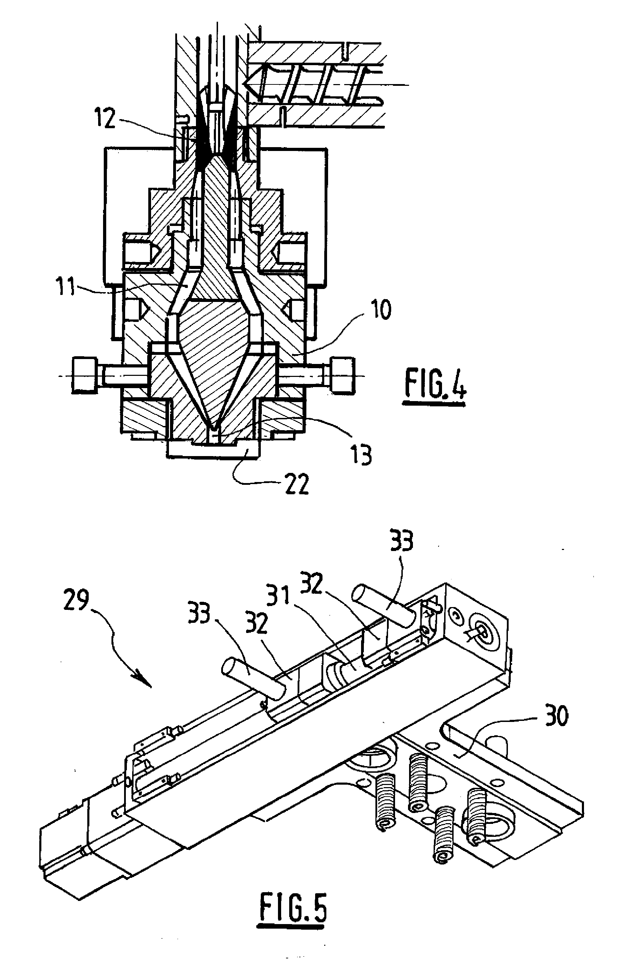

A la place de la tête de soufflage, une tête d'extrusion peut être utilisée qui est représentée en figure 4.

Cette tête d'extrusion comporte une structure similaire à celle de la tête de soufflage, à l'exception du fait qu'elle ne comprend pas de conduit de soufflage, et que l'extrémité de la partie mobile ne comporte pas de tige.

En outre, au niveau de l'ouverture d'expulsion 13, une filière 22 permettant de former la section de matière sortant par l'ouverture d'expulsion.

Comme représenté en figure 5, la machine 1 est équipée de moyens de transport de pièces 29.

Ces derniers comportent une base 30 fixée à la machine 1, équipée d'une tige cylindrique 31 sur laquelle des coulisseaux 32 sont montés déplaçables en translation. Deux plots cylindriques 33 formant butées font saillie vers l'extérieur depuis les coulisseaux 32.

Les moyens de transport de pièces 29 permettent, dans le cas d'un surmoulage d'une pièce, de déplacer la pièce depuis la position de chargement vers la position de surmoulage dans laquelle la pièce est disposée en regard de la tête 7, 8, 9 correspondante.

Il est alors possible de fonctionner en temps masqué, c'est-à-dire de réaliser le surmoulage d'une pièce pendant le chargement de la pièce suivante à surmouler.

Ces moyens de transport 29 sont également adaptés pour réaliser le déplacement des pièces depuis la position de surmoulage vers une position de déchargement.

L'équipement comporte en outre une partie amovible de contrôle et/ou de commande de la machine, non représentée, connectée à la machine 1 par l'intermédiaire d'une interface.

Comme il va de soi, l'invention ne se limite pas à la seule forme d'exécution de ce dispositif, décrite ci-dessus à titre d'exemple, mais elle embrasse au contraire toutes les variantes.

## Revendications

1. Equipement de réalisation de pièces plastiques comportant une machine (1) comprenant une chambre de plastification (2) équipée d'une vis de plastification (3) et d'une ouverture (4) d'amenée de la matière plastique en liaison avec un pot intermédiaire (5), destiné à être chargé avec de la matière plastique, un piston (6) déplaçable entre une position de chargement du pot intermédiaire (5) et une position de déchargement de celui-ci, **caractérisé en ce qu'**il comprend un ensemble de têtes de délivrance de matière plastique comprenant au moins deux éléments parmi une tête de soufflage (7), une tête d'injection (8) et une tête d'extrusion (9), chaque tête comprenant une partie fixe (10) par rapport à la machine (1), la partie fixe (10) comportant une chambre (11) avec une ouverture (12) d'amenée de la matière plastique, tournée vers le pot intermédiaire (5) et une ouverture (13) d'expulsion de la matière débouchant vers l'extérieur à l'opposé de l'ouverture (12) d'amenée de la matière, la partie fixe (10) comprenant des moyens de fixation (14) destinés à coopérer avec des moyens de fixation complémentaires (15) de la machine (1), et une partie mobile (16) par rapport à la machine, la partie mobile comprenant une tige de commande (17) destinée à être logée, au moins en partie, dans la machine (1).

2. Equipement selon la revendication 1, **caractérisé en ce que** la tige de commande (17) traverse le pot intermédiaire (5) et est commandée par son extrémité opposée à la tête de délivrance de matière plastique (7, 8, 9).

3. Equipement selon l'une des revendications 1 et 2, **caractérisé en ce que** le piston (6) présente une forme générale tubulaire et définit un logement central traversant dans lequel est inséré la tige de commande (17).

4. Equipement selon l'une des revendications 1 à 3, **caractérisée en ce qu'**il comporte des moyens de transport de pièces (19), déplaçables entre une position de moulage dans laquelle la pièce est disposée en regard de la tête de délivrance de matière plastique (7, 8, 9) et une position de chargement et/ou de déchargement dans laquelle la pièce est éloignée de la tête de délivrance de matière plastique (7, 8, 9).

5. Equipement selon l'une des revendications 1 à 4, **caractérisée en ce qu'**il comporte une partie amovible de contrôle et/ou de commande de la machine, connectée à la machine (1) par l'intermédiaire d'une interface.
